# EUROPÄISCHE PATENTANMELDUNG

(11) **EP 1 284 568 A1**
(43) Veröffentlichungstag der Anmeldung: **19.02.2003**
(21) Anmeldenummer: 01119921.3
(22) Anmeldetag: 17.08.2001
(51) Int. Cl.: H04L 29/06, H04L 12/28

(54) **Verfahren und Datenverarbeitungsvorrichtung zum Übertragen von Daten über verschiedene Schittstellen**

(71) Anmelder: SIEMENS AKTIENGESELLSCHAFT, 80333 München (DE)
(72) Erfinder: Dillinger, Markus, 81737 München (DE); Eichinger, Josef, 85464 Neufinsing (DE); Halfmann, Ruediger, 67697 Otterberg (DE); Zirwas, Wolfgang, 82194 Groebenzell (DE)

(57) **Zusammenfassung**

Die Erfindung bezieht sich auf ein Verfahren zum Übertragen von Daten (D) über eine Schnittstelle (VA, BS, A) eines Kommunikationssystems (GSM/A) zwischen zumindest einem Sender (MS1) und zumindest einem Empfänger (MS2), bei dem zumindest ein Teil der Daten (CD) sicher zu übertragen ist. Zur effizienteren und trotzdem sicheren Übertragung der Daten wird vorgeschlagen, dass der sicher zu übertragende Teil der Daten (CD) über eine sichere Schnittstelle (VA, GSM, A) übertragen wird und der restliche Teil der Daten (ND) über eine nicht speziell gesicherte Schnittstelle (VB, WLAN, B) insbesondere eines anderen Kommunikationssystems übertragen wird.

Als der sicher zu übertragende Teil der Daten (CD) können Grunddaten für die Wiederherstellung einer Grundinformation ausgewählt und/oder übertragen werden. Als der sicher zu übertragende Teil der Daten (CD) kann auch ein Code zum Entschlüsseln codierter Daten (ND) übertragen werden, wobei dann der restliche Teil der Daten (ND) als mit dem Code (CD) verschlüsselte Daten (ND) übertragen wird.

Die sichere Schnittstelle (VA, GSM, A) ist sicher hinsichtlich der Verfügbarkeit und/oder sicher hinsichtlich der Datensicherheit ausgebildet.

## Beschreibung

Die Erfindung bezieht sich auf ein Verfahren zum Übertragen von Daten über eine Schnittstelle eines Kommunikationssystems mit den oberbegrifflichen Merkmalen des Patentanspruchs 1 bzw. Datenverarbeitungsvorrichtungen zum Durchführen eines solchen Verfahrens.

Derzeit gibt es verschiedenartige Kommunikationssysteme, insbesondere Funk-Kommunikationssysteme, die sich durch eine Vielzahl von Kriterien unterscheiden. Insbesondere zellulare Mobilfunksysteme gemäß dem GSM (Global System für Mobile Communication) oder dem UMTS (Universal Mobile Telecommunication System) ermöglichen eine sichere Datenübertragung, wobei Sicherheit hinsichtlich sowohl der eigentlichen Datencodierung bzw. Datenverschlüsselung als auch bezüglich der garantierten Verbindungsbereitstellung zu verstehen ist.

Im Rahmen solcher Kommunikationssysteme findet zur Identifizierung und Autorisierung eines Teilnehmers, der mit seinem Mobilfunkgerät eine Verbindung zu einer netzseitigen Station aufbaut, Authentisierung und Autorisierung statt. Entsprechende Verfahren bieten daher eine hohe Sicherheit, da nur direkte Teilnehmer einer einzigen Verbindung zwischen einer teilnehmerseitigen Station und den entsprechenden senderseitigen Stationen die über eine entsprechende Funkschnittstelle übertragenen Daten auf legale Art und Weise senden bzw. empfangen können. Durch die direkte Zuordnung der Verbindung zu einem ganz bestimmten, netzseitig registrierten Teilnehmer sind auch Vergebührungen (Accounting, Billing) für angeforderte oder beanspruchte Dienste möglich.

Ein weiterer Vorteil dieser Systeme besteht in der hohen Mobilität der Teilnehmer durch ein entsprechendes Mobilitätsmanagement. Dies ermöglicht einen Wechsel einer Sende-/Empfangsstation von einer Funkzelle in eine überlappend benachbarte Funkzelle ohne die Verbindung abbrechen zu müssen. Netzseitige Verfahrensabläufe koordinieren den Übergang der Sende-/Empfangsstation derart, dass eine vollständige Übertragung von Daten über die wechselnden Funkschnittstellen ohne Datenverlust oder kritische Datenverzögerung möglich ist.

In nachteilhafter Weise ist bei solchen Systemen der Verwaltungsaufwand sehr hoch, was zu hohen Verbindungskosten pro übertragener Datenmenge führt.

Im Gegensatz dazu gibt es funk- oder kabelgestützte Datennetze, insbesondere lokale Datennetze gemäß einfachen Übertragungsstandards, wie beispielsweise das WLAN (Wireless Local Area Network) oder das H2 (HiperLAN Typ 2), deren Anwendung sich auf zumeist einzelne Gebäude oder Gebäudekomplexe beschränkt. Bei derartigen Kommunikationssystemen erfolgt von einer Vielzahl von Stationen, die zumeist als Computer eingerichtet sind, ein Zugriff auf ein gemeinsames Übertragungsmedium. Dies ermöglicht einerseits eine Übertragung großer Datenmengen in kurzer Zeit bei zugleich geringen Kosten, ermöglicht aber in nachteilhafter Weise keine Datensicherheit, da alle Stationen auf sämtliche Daten zugreifen können. Zugriffsbeschränkungen auf in einer Station gespeicherte Daten können zwar prinzipiell eingerichtet werden, aber auch dies in der Regel nur mit einer geringen Sicherheit gegenüber unberechtigten Zugriffen und mit einem hohem Programmieraufwand.

Insbesondere ist bei derartigen Systemen eine Vergebührung von beanspruchten Diensten oder Dienstleistungen nicht möglich, da eine Authentisierung und Autorisierung eines bestimmten Teilnehmers nur bedingt oder gar nicht möglich ist.

Hinsichtlich der Mobilität gibt es zwei grundlegende Situationen, einerseits für beliebige Zugriffe dritter Stationen frei zugängliche Netze, die entsprechend geringe Datensicherheit bieten und andererseits Netze, die nur bereits registrierten und mit entsprechenden Paßworten ausgestatteten Dritt-Stationen einen Zugriff ermöglichen, was die Mobilität sehr beschränkt.

Derzeit werden weitere Kommunikationssysteme entwickelt, die als Ad-Hoc-Netze bezeichnet werden. Diese Kommunikationssysteme bestehen aus einer Vielzahl von zumeist mobilen Stationen, die mit beliebigen Stationen Funkverbindungen aufbauen können. Die Stationen haben dabei eine Doppelfunktion, einerseits als eigenständige Sende-/Empfangseinrichtung für einen Teilnehmer und andererseits als Relaisstation für Daten die von fremden Stationen empfangen und an andere fremde Stationen weiterzuleiten sind. Für derartige Kommunikationssysteme werden entsprechende Leitweg-Algorithmen und ein entsprechendes Teilnehmer-Management eingerichtet.

Zusammengefasst untergliedern sich die Kommunikationssysteme somit grob in zwei Klassen. Die Übertragungssysteme der einen Klasse (Klasse A) verfügen dabei über alle Eigenschaften, wie sie am Beispiel der zellularen Funk-Kommunikationssysteme vorstehend aufgeführt wurden. Die Übertragungssysteme der anderen Klasse (Klasse B) verfügen über derartige Eigenschaften und entsprechende Verfahren nur teilweise oder überhaupt nicht. Übertragungssysteme dieser zweiten Klasse B sind die vorstehend beispielhaft aufgeführten lokalen Datennetze. Diese können zudem entweder flächendeckend verfügbar sein oder nur in lokal begrenzten Inseln existieren, wobei letzteres eine zentrale Verwaltung der verschiedenen Inseln wenn überhaupt dann nur sehr aufwendig ermöglicht.

Um eine ausreichende Datensicherheit zu ermöglichen, findet, soweit von dem entsprechenden System vorgesehen, eine Autorisierung statt. Dabei werden Verschlüsselungscodes üblicherweise per Brief, Telefon etc. an einen Teilnehmer übermittelt, was insbesondere im Fall des Briefwechsels mit vergleichsweise hohem Aufwand und erheblichen Verzögerungen verbunden ist, bevor eine erste Datenübertragung durchgeführt werden kann. Aufgrund der eingesetzten Technik lassen sich die entsprechenden Codes nur einmalig vergeben, so dass es sich um eine knappe Ressource handelt. Der Umfang der zu übermittelnden Schlüsselinformation ist gering. Aufwendige Verschlüsselungstechniken, die beispielsweise eine dynamische Vergabe von Codes verwenden, kontinuierliche Verschlüsselungsverfahren einsetzen, übermittelte Informationen nur teilweise verschlüsseln, eine stufenweise Entschlüsselung übermittelter Informationen gewährleisten, wie beispielsweise bei einer dynamischen Vergabe einer Dienstegüte QoS (Quality of Service) oder ein dynamisches Einbuchen in einen aktuell übermittelten Datenstrom ermöglichen, können bei den Systemen der zweiten Klasse B nicht realisiert werden.

Die Aufgabe der Erfindung besteht darin, ein Verfahren zum Übertragen von Daten über eine Schnittstelle eines Kommunikationssystems vorzuschlagen, welches die Vorteile der verschiedenartigen Kommunikationssysteme kombiniert verwendet. Ferner sollen entsprechende Datenverarbeitungsvorrichtungen zum Durchführen eines solchen Verfahrens bereitgestellt werden.

Diese Aufgabe wird durch das Verfahren mit den Merkmalen des Patentanspruchs 1 bzw. Datenverarbeitungsvorrichtungen mit den Merkmalen der Patentansprüche 10 bzw. 11 gelöst.

Ein Verfahren zum Übertragen von Daten über eine Schnittstelle eines Kommunikationssystems ist besonders effektiv, wenn die zu übertragenden Daten in Teildatenmengen aufgeteilt werden, wobei ein sicher zu übertragender Teil der Daten über eine sichere Schnittstelle übertragen wird, beispielsweise eine Schnittstelle in einem zellularen FunkKommunikationssystem gemäß dem GSM, und der restliche Teil der Daten über eine nicht speziell gesicherte Schnittstelle übertragen wird, beispielsweise eine Schnittstelle in einem herkömmlichen Datennetz. Dadurch können sicher zu übertragende geringe Datenmengen über eine sichere Datenverbindung übermittelt werden, während die in der Regel größeren restlichen Teildatenmengen über eine Schnittstelle eines Kommunikationssystems übertragen werden können, das zwar nur eine geringe oder keine Sicherheit dafür aber einen hohen Datendurchsatz ermöglicht. Unter Daten sind dabei alle Formen und Arten von Daten, Informationen und Signalen zu verstehen, die über eine derartige Schnittstelle ausgetauscht werden können, insbesondere auch Authentifizierungsdaten, Autorisierungsdaten, Sicherheitsinformation, Vergebührungsdaten, Lokalisierungsinformationen und Mobilitätsdaten.

Vorteilhafte Ausgestaltungen sind Gegenstand von abhängigen Ansprüchen.

In vorteilhafter Weise wird bei der Aufteilung einer zu übertragenden Datenmenge der sicher zu übertragende Teil der Daten aus Grunddaten für die Wiederherstellung einer wesentlichen Grundinformation ausgewählt bzw. übertragen. Dies können beispielsweise bei der Übertragung eines Bildes Daten sein, die eine grob gerasterte Wiedergabe des Bildes bei der Empfängerseite im Fall des Verlustes der restlichen Daten ermöglichen. Die restlichen Teile der Daten, die aus den diese Grundinformation ergänzenden Daten bestehen, können dann über eine nicht speziell gesicherte Schnittstelle z. B. eines lokalen Datennetzes übertragen werden, um letztendlich die vollständige Rekonstruktion des Bildes zu ermöglichen. Bei einer solchen Vorgehensweise ist sichergestellt, dass wesentliche grundlegende Datenbestandteile sicher übertragen werden, während ergänzende Datenbestandteile über eine nicht oder nur bedingt gesicherte Schnittstelle übertragen werden. Im ungünstigsten Fall ist ein Verlust dieser Daten zwar nachteilhaft aber empfängerseitig noch für die gewünschten Zwecke vertretbar.

Die als sicher zu übertragenden Teile der Daten können aber auch alternativ oder zusätzlich aus einem Code zum Entschlüsseln codierter Daten bestehen, wobei dann über die sichere Schnittstelle ein zum Entschlüsseln erforderlicher Code übertragen wird, während über die nicht speziell gesicherte Schnittstelle entsprechend codierte Daten übertragen werden. Empfängerseitig kann dadurch eine große Datenmenge, die über ein lokales Datennetz übertragen wurde, problemlos mit dem über die sichere Schnittstelle empfangenen zugeordneten Codes entschlüsselt werden. Diese Vorgehensweise bietet den besonderen Vorteil, den größten Teil der Daten oder die gesamten zu übertragenden Daten nach einer entsprechenden Verschlüsselung über ein Datennetz mit hohem Datendurchsatz übertragen zu können, wobei eine bedingte Sicherheit durch die vorherige Verschlüsselung gewährleistet ist. Ein Zugriff seitens Dritter auf diese verschlüsselten Daten ist ohne den über die sichere Schnittstelle übertragenen Code, auf den der Dritte keinen Zugriff hat, unkritisch.

In zweckmäßiger weise findet eine Verschlüsselung von Daten in einer speziellen Trennungseinrichtung statt, die z. B. in einer mobilen Sende-/Empfangsstation eines Teilnehmers eingerichtet sein kann. Die entsprechende Sende-/Empfangsstation weist dann zwei externe Schnittstellen auf, beispielsweise eine Schnittstelle zu lokalen Datennetzen und eine andere Schnittstelle zu einem zellularen Funk-Kommunikationsnetz. Die Trennungseinrichtung trennt und/oder verschlüsselt eintreffende Daten und verteilt diese dann entsprechend auf die beiden Schnittstellen. Empfängerseitig werden die über die beiden Schnittstellen übertragenen und empfangenen Daten dann wieder entsprechend zu einem einzigen rekonstruierten Datenstrom zusammengesetzt und gegebenenfalls entschlüsselt. Die Trennungseinrichtung kann somit je nach Erfordernis eine Aufteilung in verschlüsselte Daten und Schlüsseldaten oder aber auch eine Aufteilung in wesentliche und unwesentliche Datenbestandteile vornehmen.

Insbesondere ermöglicht ein derartiges Verfahren die Übertragung von vergebührungsrelevanten Daten nach entsprechender Autorisierung und Authentisierung. Da die sichere Schnittstelle in der Regel eine beidseitige Übertragung in beiden Richtungen ermöglicht, können derartige vergebührungsrelevanten Daten problemlos ausgetauscht und übertragen werden.

In vorteilhafter Weise ermöglicht eine derartige Verfahrensweise auch eine optionale Nutzung nur einer der beiden Schnittstellen. Dies ermöglicht insbesondere für den Fall einer kontinuierlichen sicheren Verbindung die zeitweilige Übertragung der nicht speziell gesichert zu übertragenden Daten über Schnittstellen lokaler Datennetze, sofern sich die entsprechende Sende-/Empfangsstation momentan im Bereich eines solchen lokalen Datennetzes befindet. Ist ein Zugriff auf ein solches nicht speziell gesichertes Netz, wie das lokale Datennetz, zeitweilig nicht möglich, können auch die nicht speziell gesichert zu übertragenen Daten für solche Zeiträume über die sichere Schnittstelle übertragen werden. Dies führt zwar für solche Zeiträume zu einer hohen Belastung der sicheren Schnittstelle, ermöglicht aber wenigstens in Zeiträumen mit Zugriffsmöglichkeit auf ein Netz des anderen Systems eine Aufsplittung der zu übertragenen Daten. Selbiges gilt entsprechend auch für den Fall einer Überbelastung des nicht speziell gesicherten Datennetzes.

Zur schnellen Vorbereitung des Zugriffs auf ein anderes Kommunikationssystem ist es besonders vorteilhaft, wenn entsprechende Informationen über Zugriffsraten und dergleichen bereits vor dem Eintreffen einer Sende-/Empfangsstation in den entsprechenden Sendebereich zu dieser übermittelt werden können.

Zur Umsetzung derartiger Verfahren sind entsprechend ausgestattete Datenverarbeitungsvorrichtungen zweckmäßig. Die Aufsplittung von Daten auf sicher zu übertragende Daten und nicht speziell gesichert zu übertragene Daten kann dabei in einer Sende-/Empfangsstation vorgenommen werden, die eine solche Datenverarbeitungsvorrichtung aufweist und als mobile Station eines Teilnehmers betrieben wird. Derartige Datenverarbeitungsvorrichtungen zum Aufsplitten bzw. entsprechend Zusammensetzen von Datenströmen können aber auch netzseitig bereitgestellt werden, z. B. bei Serverrechnern, die einen Zugriff auf allgemeine Daten ermöglichen. Dabei können die Daten bereits für Zugriffe von der Datenverarbeitungsvorrichtung zu einem vorherigen Zeitpunkt aufgesplittet worden sein, so dass ein zugreifender Teilnehmer auf einerseits einen Datenspeicherbereich mit sicher zu übertragenen Daten über eine sichere Schnittstelle zugreift und andererseits auf einen Datenspeicherbereich mit nicht gesichert zu übertragenen Daten mit einem Zugriff über ein lokales Datennetz oder dergleichen zugreift.

Eine sichere Schnittstelle kann somit insbesondere sicher hinsichtlich der Verfügbarkeit und des möglichst geringen Datenverlustes bei Übertragungen sein, kann aber auch alternativ oder zusätzlich sicher hinsichtlich der Datensicherheit mit Blick auf unberechtigte Zugriffe auf Daten durch Dritte ausgebildet sein.

Ein Ausführungsbeispiel wird nachfolgend anhand der Zeichnung näher erläutert. Es zeigen:
Fig. 1 schematisch verschiedene Einrichtungen von verschiedenartigen Kommunikationssystemen, die eine kombinierte Übertragung von Daten ermöglichen und
Fig. 2 schematisch das Aufsplitten eines Datenstroms in einen sicher und einen nicht gesichert zu übertragenen Teildatenstrom.

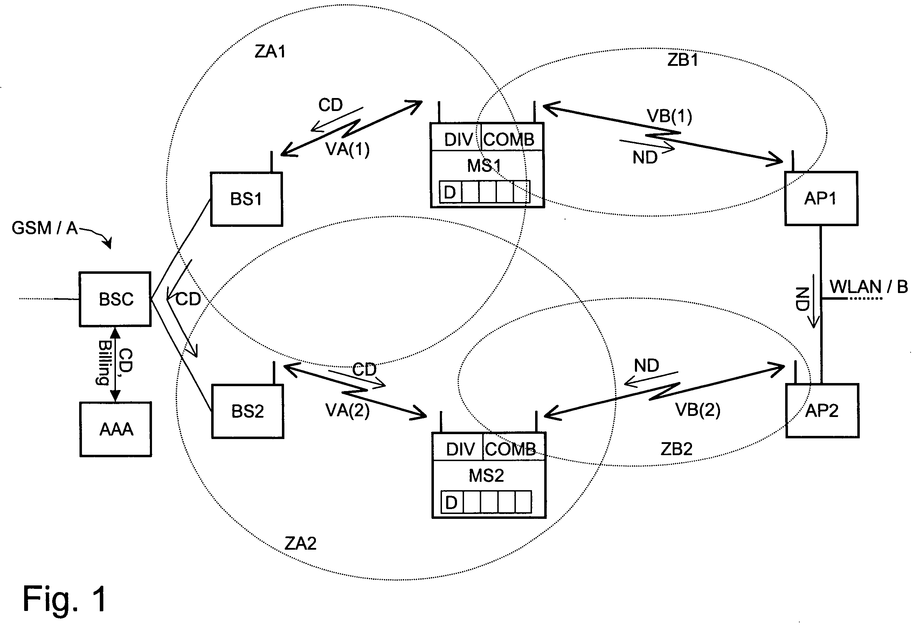

Wie aus Fig. 1 ersichtlich, besteht eine beispielhafte Anordnung verschiedener Kommunikationssysteme mit entsprechenden Schnittstellen aus einer Vielzahl von einzelnen Einrichtungen, von denen schematisch nur ein kleiner Teil skizziert ist. Für ein Kommunikationssystem mit einer hohen Übertragungssicherheit sowohl mit Blick auf das Verhindern von unberechtigten Zugriffen auf die Daten als auch mit Blick auf die Verfügbarkeit der Schnittstelle sind als erstes Kommunikationssystem A Einrichtungen eines GSM-Funk-Kommunikationssystems skizziert. Dabei werden beispielhaft zwei Basisstationen BS1, BS2 von einem Basisstations-Steuerzentrum BSC gesteuert. Das Basisstations-Steuerzentrum BSC steht außerdem mit anderen netzseitigen Kommunikationssystemeinrichtungen in Verbindung. Beim dargestellten Ausführungsbeispiel versorgt jede der Basisstationen BS1, BS2 jeweils zumindest eine Funkzelle ZA1 bzw. ZA2, wobei die beiden Funkzellen ZA1, ZA2 beim vorliegenden Ausführungsbeispiel einander teilweise überlappen, so dass sich eine Teilnehmerstation MS1, MS2 von der ersten in die zweite Funkzelle ZA1 bzw. ZA2 bewegen kann, ohne dass eine bestehende Daten- bzw. Informationsübertragung unterbrochen werden muss.

Als Beispiel für ein zweites Kommunikationssystem B mit einer nicht speziell gesicherten Datenübertragungsmöglichkeit ist ein lokales Datennetz, hier insbesondere ein lokales Funk-Datennetz WLAN dargestellt. Skizziert sind dabei zwei Zugriffspunkte AP1, AP2 mit Funkschnittstellen für Zugriffe von Teilnehmerstationen. Ferner weisen die Zugriffspunkte eine Schnittstelle zwischen sich und weiteren Zugriffspunkten oder sonstigen Netzeinrichtungen auf, die im vorliegenden Beispiel als verkabelte Schnittstelle dargestellt ist. Jeder der Zugriffspunkte AP1, AP2 bildet zumindest eine Funkzelle aus, wobei die beiden dargestellten Funkzellen ZB1 bzw. ZB2 beim vorliegenden Ausführungsbeispiel nicht überlappen. Eine über die erste Datennetz-Funkschnittstelle ZP1 kommunizierende Teilnehmerstation MS1 muss somit beim Wechsel in die Datennetz-Funkzelle ZP2 die Verbindung bzw. Übertragung abbrechen und erneut aufbauen. Selbst bei überlappenden Datennetz-Funkzellen ZP1, ZP2 wäre jedoch in der Regel ein Abbruch und ein Neuaufbau einer Funkverbindung erforderlich, da einem Funk-Datennetz Einrichtungen zum koordinierten Übergeben einer Teilnehmerstation von einer ersten zu einer zweiten Datennetz-Funkzelle ZB1 bzw. ZB2 fehlen.

Als teilnehmerseitige Stationen sind beim vorliegenden Ausführungsbeispiel eine erste Station MS1 und eine zweite Station MS2 dargestellt. Die erste Station MS1 soll nachfolgend zur Vereinfachung als eine sendende Station MS1 angesehen werden, die Daten D aufweist, die zu der zweiten Station MS2 zu übermitteln sind, wobei diese zweite Station nachfolgend zur Vereinfachung als empfangende Station MS2 betrachtet wird.

Möglich sind jedoch auch beliebige andere Situationen, beispielsweise sendende oder empfangende Stationen, die anderen Kommunikationssystemen zugeordnet sind und über die hier dargestellten beiden Kommunikationssysteme A, B mit einer der beiden Stationen MS1, MS2 kommunizieren. Möglich ist auch als weitere Station lediglich eine Speichereinrichtung zu verwenden, die Daten zum Abruf durch eine der beiden Stationen MS1, MS2 zentral bereit stellt oder davon empfängt. Insbesondere ist auch eine Kommunikation mit Datenaustausch in beiden Richtungen zwischen zwei Stationen MS1, MS2 möglich.

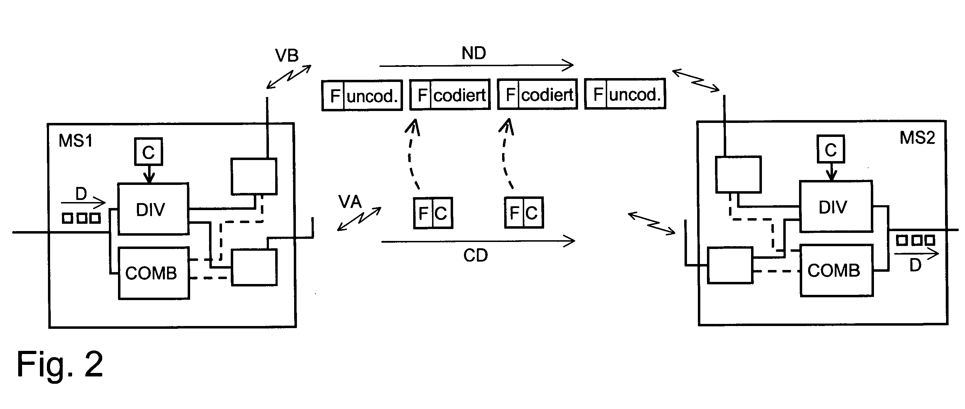

Ein besonders bevorzugtes Verfahren zum Übertragen von Daten zwischen zwei Stationen MS1, MS2 wird nachfolgend unter Bezug auf die Fig. 1 und 2 beschrieben. Dabei wird beispielhaft davon ausgegangen, dass Daten D von der ersten, sendenden Station MS1 an die zweite, empfangende Station MS2 zu übertragen sind. Beim vorliegenden Ausführungsbeispiel kann zwischen den beiden Stationen MS1 und MS2 sowohl eine Datenverbindung über das erste Kommunikationssystem GSM/A als auch über das zweite Kommunikationssystem WLAN/B aufgebaut werden, da beide Stationen MS1, MS2 über Sende-/Empfangseinrichtungen verfügen, welche die beiden Stationen MS1, MS2 in die Lage versetzen, sowohl mit Basisstationen BS1, BS2 des ersten Kommunikationsnetzes GSM/A als auch mit Zugriffspunkten AP1, AP2 des zweiten Datennetzes eine Kommunikationsverbindung VA bzw. VB aufzubauen.

Eine erste Kommunikationsverbindung kann somit zum Übertragen von Daten von der ersten, sendenden Station MS1 über eine erste sichere Funkschnittstelle VA(1) zu der ersten Basisstation BS1, von dieser über das erste Kommunikationssystem GSM/A zu dessen zweiter Basisstation BS2 und von dort über eine weitere sichere Funkschnittstelle VA(2) zu der zweiten, empfangenden Station MS2 aufgebaut werden. Eine weitere Kommunikationsverbindung kann von der ersten, sendenden Station MS1 über eine erste Datennetz-Funkschnittstelle VB(1) zu dem ersten Zugriffspunkt AP1 des zweiten Kommunikationssystems WLAN/B, von dort über das Datennetz zu dessen zweitem Zugriffspunkt AP2 und von dort über eine zweite Datennetz-Funkschnittstelle VB(2) zu der zweiten, empfangenden Station MS2 aufgebaut werden. Dieser zweite Datenübertragungsweg ist jedoch im Vergleich zu dem erstgenannten als nicht speziell gesicherter oder nicht sicherer Datenübertragungsweg anzusehen.

Zum Übertragen der zu übertragenden Daten D werden diese in der ersten, sendenden Station MS1 zu einer Datenverarbeitungsvorrichtung DIV geführt. Die Datenverarbeitungsvorrichtung DIV teilt die eingehenden Daten D in zwei Datenströme ND, CD auf, wobei der eine Datenstrom sicher zu übertragende Daten CD und der andere Datenstrom nicht speziell gesichert zu übertragende Daten ND aufweist.

Von der Datenverarbeitungsvorrichtung DIV, die somit als Trennungseinrichtung bzw. Aufteilungseinrichtung DIV anzusehen ist, werden die sicher zu übertragenden Daten der Sendeeinrichtung für eine Übertragung über die sichere Funkschnittstelle VA und das sichere erste Kommunikationssystem GSM/A zugeführt und letztendlich über dieses sichere Kommunikationssystem GSM/A zur zweiten, empfangenden Station MS2 übertragen. Die nicht speziell gesichert zu übertragenden normalen Daten ND werden von der Datenverarbeitungsvorrichtung DIV der Sendeeinrichtung für eine Kommunikation über die Datennetz-Funkschnittstelle VB zugeführt und über das nicht gesicherte oder zumindest nicht speziell gesicherte zweite Kommunikationsnetz WLAN/B zu der zweiten, empfangenden Station MS2 übertragen.

Die zweite, empfangende Station MS2 weist entsprechend eine Datenverarbeitungsvorrichtung COMB auf, die auch als Rekonstruierungs- oder Kombinierungseinrichtung COMB bezeichnet werden kann. Diese Datenverarbeitungseinrichtung COMB bekommt von den entsprechenden Empfangseinrichtungen der zweiten, empfangenden Station MS2, die über die sichere Funk-Schnittstelle VA(2) empfangenen sicheren Daten CD und über die nicht speziell gesicherte Datennetz-Funkschnittstelle VB(2) die normalen, nicht speziell gesicherten Daten ND zugeleitet. Die Datenverarbeitungsvorrichtung COMB kombiniert die entsprechend empfangenen Datenströme bzw. Daten ND, CD und rekonstruiert soweit möglich die ursprünglich zu versendenden Daten D, um diese dann entsprechend zur Endverarbeitung, beispielsweise Ausgabe durch einen Lautsprecher oder an einen Rechnerchip, aufzubereiten.

Zweckmäßiger Weise werden die einzelnen zu übertragenden Datenpakete in der aufteilenden Datenverarbeitungsvorrichtung DIV mit einem Merker bzw. Flag F versehen, der dann in der rekonstruierenden Datenverarbeitungsvorrichtung COMB eine eindeutige Zuordnung der einzelnen empfangenen Datenpakete bzw. Daten CD, ND ermöglicht.

Für die Aufteilung der zu übertragenden Daten in zwei getrennte Datenströme ND, DC können verschiedene Kriterien herangezogen werden. Gemäß einer ersten Ausführungsform kann als Kriterium die Sicherheit gegen unberechtigte Zugriffe auf eine größere, zu übertragende Datenmenge angesetzt werden. In diesem Fall werden die zu übertragenden Daten D mit einem Code C, der durch eine Codeerzeugungseinrichtung bereitgestellt werden kann, codiert. Dabei wird der Code bzw. Schlüssel C als sicher zu übertragende Daten CD über das erste, sichere Kommunikationsnetz GSM/A übertragen, während die verschlüsselten bzw. codierten Daten als nicht speziell zu sichernde normale Daten ND über das zweite, nicht speziell gesicherte Kommunikationsnetz WLAN/B übertragen werden.

Ein weiteres beispielhaftes Kriterium für die Aufteilung eines Datenstroms kann darin bestehen, dass bestimmte Datenanteile der Daten D auf jeden Fall beim Empfänger zur Rekonstruktion einer zumindest erforderlichen Information sicher zu übertragen sind, während die restlichen Datenanteile der zu übertragenden Daten lediglich als zusätzliche Information zur Erhöhung der Qualität der rekonstruierten Daten angesehen werden. Beispielsweise können in einem solchen Fall von der aufteilenden bzw. trennenden Datenverarbeitungsvorrichtung DIV grob gerasterte Bilddaten eines Bildes über die sichere Schnittstelle und das sichere Kommunikationsnetz GSM/A übertragen werden, während die große Menge restlicher Daten als nicht speziell zu sichernde normale Daten DN über das nicht speziell gesicherte Kommunikationsnetz WLAN/B übertragen werden. Empfängerseitig ist somit mit einer sehr hohen Wahrscheinlichkeit davon auszugehen, dass zumindest die über das sichere Kommunikationsnetz GSM/A übertragenen Daten CD rekonstruiert werden können, so dass beispielsweise ein grob gerastertes Schwarz/weiß-Bild rekonstruiert werden kann, während die über das nicht speziell gesicherte Kommunikationsnetz WLAN/B übertragenen Daten ND zur Erhöhung der Auflösung des rekonstruierten Bildes sowie zum Einbringen von Farbanteilen dienen. Andere Kriterien können beispielsweise wesentliche Daten einer Datenbank sein, die sicher zu übertragen sind, während zusätzliche Informationsdaten über einen nicht speziell gesicherten Weg übertragen werden können.

Wie aus Fig. 1 ersichtlich, kann auch eine Verbindung zu einer netzseitigen Vergebührungseinrichtung AAA aufgebaut werden, falls das sichere Kommunikationsnetz GSM/A eine Einrichtung zum Autorisieren, Authentisieren und Vergebühren (AAA: Authorization Authentification Accounting) aufweist. Dadurch wird ein Zugriff der ersten Station MS1 auf einen speziellen Dienst oder Datenspeicher ermöglicht, wobei dieser spezielle Dienst oder die abzurufenden Daten nur gegen eine entsprechende Vergebührung (billing) zugreifbar sind. Nach Verbindungsabbau werden die entsprechenden Vergebührungsinformationen an eine entsprechende Vergebührungszentrale weitergeleitet, die dann für eine Rechnungsstellung gegenüber dem Teilnehmer sorgt, dem die erste Station MS1 zuzuordnen ist.

Dem vorstehend beschriebenen Ausführungsbeispiel liegt vorzugsweise das Konzept zugrunde, neben der eigentlich gewünschten Verbindung zu einem hoch-bit-ratigen Funksystem, wie z.B. WLAN oder Hiperlan/2 (H2) eine zusätzliche Verbindung zu einem der bekannten Mobilfunksysteme wie GSM-GPRS (GPRS: General Packet Radio Service) bzw. in Zukunft UMTS mit sehr geringer Datenrate aufzubauen. Über diese zusätzliche Verbindung werden Funktionen des diesbezüglich gut ausgestatteten Systems dem minder qualifizierten Übertragungssystem zur Verfügung gestellt.

Grundsätzlich kann jede zwischen zwei Kommunikationspartnern bzw. Stationen auszutauschende Information durch eine Datensequenz repräsentiert werden, die ihrerseits wiederum in zwei oder mehr Sub-Datensequenzen gesplittet werden kann. Beim vorstehend beschriebenen Ausführungsbeispiel sind dies die Daten D, die in Teil-Datenströme CD, ND aufgeteilt werden.

In vorteilhafter Weise können Systeme der Klasse A, wie beispielsweise das GSM ausgeprägte Sicherheitsmechanismen zur Verfügung stellen, wo hingegen die Systeme der Klasse B, beispielsweise das vorstehend beschriebene WLAN über keine oder nur "schwache" Sicherheitsmechanismen aber eine hohe Datenrate verfügen.

Die einzelnen Datensequenzen können nun entweder, je nach Anwendungsfall über die beiden verschiedenen Kommunikationssysteme, insbesondere Funk-Kommunikationssysteme A, B übertragen werden, wobei der Empfänger oder die empfangende Station MS2 die Daten bzw. Datensequenzen CD, ND beider Empfangswege VA(1)-A-VA(2) bzw. VB(1)-B-VB(2) zu einem resultierenden Datenstrom oder zu rekonstruierten Daten D kombiniert.

Die einzelnen Daten bzw. Datensequenzen können jedoch auch unterschiedlich gesichert werden. Die Sicherungsinformationen würden in diesem Fall über das sichere Kommunikationssystem der Klasse A übertragen werden, während die restlichen Daten über das andere Kommunikationssystem B übertragen werden. Die empfangende Station MS2 verwendet diese Informationen, die sie über das sichere Kommunikationssystem A empfangen hat, um die Datensequenzen bzw. Daten zu decodieren, die sie über das Kommunikationssystem der Klasse B erhalten hat bzw. erhält. Neben einer Verschlüsselung zum Codieren bzw. Decodieren von Daten ist es natürlich auch möglich, eine Aufteilung zu wählen, bei der die Daten sich gegenseitig ergänzen.

Üblicherweise wird bei den verschiedenartigsten Kommunikationssystemen neben dem Nutzerdatenstrom auch eine Vielzahl von Signalisierungsinformationen übertragen. Je nach Notwendigkeit können diese vorliegend über das Kommunikationssystem der Klasse A und/oder das Kommunikationssystem der Klasse B übertragen werden. Die empfangende Station oder der empfangende Dienst erhalten Signalisierungsinformationen entsprechend über einen oder beide Kommunikationswege.

Insbesondere bei GPRS bzw. UMPS ist eine durchgehend aktive oder zumindest bereitgestellte Verbindung (Always-On-Verbindung) möglich, bei der deren entsprechenden Funkzellen ZA1, ZA2 nur mit den tatsächlich übertragenen geringen Datenmengen belastet werden, so dass auf diese Art und Weise sehr viele verschiedene Nutzer bzw. Stationen versorgt werden können. Möglich sind also Verfahren wie das sogenannte "soft handover" oder die sogenannte "fall back solution".

Mit dem Prinzip des vorstehend beschriebenen Ausführungsbeispiels ist eine Vielzahl von Ausführungsvarianten umsetzbar.

Gemäß einer ersten Ausführungsvariante werden Daten D über ein sicheres Kommunikationssystem A vom Teilnehmer über dessen Station MS1 aus bei einer weiteren Station angefordert, wobei diese Daten D der anfordernden Station MS1 über das gleiche Kommunikationssystem A übertragen werden. Kommunikationssysteme der Klasse A verfügen dabei vorzugsweise über alle nötigen Sicherungsverfahren wie Authentisierung, Autorisierung und Codierungsmöglichkeiten, so dass diese als "sicheres System" bezeichnet werden können. Damit ist insbesondere auch eine Unterstützung von Vergebührung und Abrechnung der beanspruchten Dienste oder Daten möglich. Bei dieser Ausführungsvariante handelt es sich von den Grundzügen her um aus dem Mobilfunk bekannte Standardverfahren, die hier daher nur der Vollständigkeit halber erwähnt werden.

Gemäß einer zweiten Ausführungsvariante werden die Daten D über ein Kommunikationsnetz der Klasse B übertragen, das über keinerlei Sicherungsverfahren oder zumindest nicht alle vorstehend möglich bezeichneten Verfahren verfügt. Bei diesen Kommunikationsnetzen B ist der Teilnehmer eines Dienstes nicht eindeutig identifizierbar. Durch die mangelhaften Sicherungsverfahren werden weder Authentisierung noch Autorisierung noch Verschlüsselung (Security) unterstützt, so dass die Daten nicht vor Manipulationen und Missbrauch geschützt werden können. Eine eindeutige Abrechnung ist ebenso unmöglich (Accounting, Billing). Diese Ausführungsvariante entspricht beispielsweise einem Funksystem, welches auf der Basis kleiner Funkinseln realisiert werden würde.

Bei einer dritten Ausführungsvariante wird eine Freischaltung verschiedener Dienstegüten, z. B. für niedrige oder hohe Auflösung bei Video-Datenströmen, während der Laufzeit bzw. während der Verbindung realisiert. Die zur Nutzung eines Dienstes benötigten Daten können komplett oder abschnittsweise codiert sein. Dadurch können unterschiedliche Qualitäten des gleichen Dateninhaltes unterschiedlichen Benutzergruppen z. B. kostenlos bzw. kostenpflichtig zur Verfügung gestellt werden. Die Abrechnungsinformation würde dazu auf zentraler Basis über ein flächendeckendes Kommunikationssystem der Klasse A an einen zentralen Abrechnungsdienst übermittelt werden.

Bei einer vierten Ausführungsvariante werden Verschlüsselungsmechanismen für die Authentisierung/Autorisierung/-Verschlüsselung auf höheren Schichten des sogenannten ISO OSI-Schichtenmodell verwendet. Das vorstehend beschriebene Verfahren ermöglicht es in einer Ausführungsvariante entsprechende Schutzmechanismen bereits in unteren Schichten zu berücksichtigen bzw. einzusetzen, was die Sicherheit erheblich erhöht. Das sichere Kommunikationssystem der Klasse A überträgt dabei nicht nur den sicherheitsrelevanten Teil der Information, z. B. den Authentifizierungs-code (higher-layercode), sondern vorzugsweise auch den Code niedrigerer Schichten (lower-layer-code), insbesondere einen Verwürfelungs-/Scrambling-Code und Punktierungsvorschriften, wobei diese Übertragung entweder nur zu Anfang einer Verbindung/Session oder aber auch blockweise bzw. kontinuierlich während der Verbindung erfolgen werden kann. In dem Kommunikationssystem ohne spezielle Sicherung der Klasse B wird z. B. der Verwürfelungscode bzw. die Punktierungsvorschrift in die Verarbeitungsprozesse der physikalischen Schichten (physical layers) geladen, um den empfangenen Datenstrom entsprechend zu verarbeiten.

Die fünfte Ausführungsvariante umfasst eine Vielzahl einzelner Untervarianten zu der dritten und der vierten Ausführungsvariante. Dazu zählen insbesondere das einmalige oder mehrmalige Übertragen von Codes bzw. Schlüsseln über das sichere Kommunikationsnetz GSM/A, was z. B. gemäß UMTS oder GSM Nutzer bzw. Teilnehmer authentifiziert und zum Zugriff auf das Übertragungssystem berechtigt bzw. autorisiert, wobei das letztgenannte Übertragungssystem keine vergleichbaren Verfahren aufweist. Ein solches Verfahren kann insbesondere auch als symmetrisches Verfahren bezeichnet werden, bei dem Daten aufgesplittet über zwei unterschiedlich sichere Wege übertragen werden, im Gegensatz zu asymmetrischen Verfahren, bei denen z. B. erst ein Schlüssel ausgetauscht wird, bevor nachfolgend mit dem Schlüssel verschlüsselte Daten übertragen werden.

Zu diesen Untervarianten gehören unter anderem die kontinuierliche Autorisierung eines Dienstes, eine blockweise Freischaltung eines Dienstes für eine vorgegebene Datenmenge bzw. Nutzungsdauer, das Anlegen von Schlüsseldepots in insbesondere mobilen Stationen zur Online- bzw. Offline-Nutzung eines Dienstes bzw. Datensatzes, insbesondere für Video- bzw. Audio-Daten, die Übermittlung von Codes zur Verschlüsselung in Aufwärtsverbindungen beim nicht spezifisch gesicherten Kommunikationssystem WLAN/B, wobei dies ebenfalls einmalig, blockweise oder kontinuierlich durchgeführt werden kann, und die getrennte Übermittlung von Codes zum Zugriffspunkt AP1, AP2 eines lokalen, isolierten Funksystems über funk- oder leitungsgebundene Systeme.

Gemäß einer sechsten Ausführungsvariante werden die Daten, die zur Nutzung eines Dienstes übertragen werden, aufgeteilt und über verschiedene Systeme übertragen. Dies entspricht z.B. der bereits beschriebenen Darstellung eines Bildes in einerseits Daten geringer Qualität mit Übertragung der entsprechenden Datenanteile über das sichere Kommunikationssystem A und in andererseits Daten zum Erzeugen einer hohen Qualität, wobei deren entsprechend großvolumiger Datenanteil über das nicht speziell gesicherte Kommunikationssystem der Klasse B, z. B. H/2, übertragen wird.

Bei einer siebten Ausführungsvariante werden zellulare, heterogene Netzwerke, z. B. lokale Funkdatennetze, mit sehr vielen unterschiedlichen Betreibern betrachtet, wobei bei solchen heterogenen Netzen die Vielzahl von Anmeldeprozeduren beim Wechsel eines Betreibers entfallen kann, die ansonsten für jedes Teilnetz bzw. jeden Betreiber neu und zeitaufwendig durchzuführen wäre. Dies vereinfacht die Realisierung eines nahtlosen Übergangs (seamless vertical handover) für mobile Teilnehmer. Dabei bestehen zwei Verbindungen, wobei eine Verbindung für Kontrollfunktionen immer bestehen bleibt, insbesondere über ein sicheres Kommunikationsnetz gemäß GSM oder UMTS. Zwischen den einzelnen lokalen Funknetzen wird jedoch gewechselt.

Gemäß einer achten Ausführungsvariante werden Informationen, die über das flächendeckend zur Verfügung stehende Funksystem an die Endgeräte übermittelt werden, dazu verwendet, den Übergang bzw. handover zwischen den verschiedenen Zellen des nicht speziell gesicherten Funksystems B zu vereinfachen. Über ein sicheres Kommunikationssystem, in dem eine Station durchgehend eingeloggt bzw. eingebucht ist, werden dabei als Informationen Vorankündigungen übermittelt, die Daten über später zu erreichende lokale Funknetze WLAN umfassen, so dass ein Verbindungsaufbau in ein solches lokales Datennetz vereinfacht wird. Während in üblicher Art und Weise von einer Station fortwährend nach Funkzellen VB(1), VB(2) gesucht werden muss, um eine Verbindung mit einem Zugriffspunkt AP1, AP2 eines lokalen Funkdatennetzes WLAN aufbauen zu können, und auch nach dem Ermitteln einer solchen Funkzelle Messungen durchgeführt werden müssen, um ideale Zugriffszeitpunkte und Zugriffsparameter einzustellen, werden diese Daten über das andere Kommunikationssystem bereits im voraus übertragen. Zum Bereitstellen solcher Daten können in dem anderen Kommunikationssystem Speicher mit entsprechenden Datenbeständen bereit gestellt werden.

Gemäß einer neunten Ausführungsvariante ist es möglich, ein optimiertes Codierungsverfahren einzuführen, das insbesondere auf inkrementeller Redundanz beruht, d.h. redundante Daten werden auf Anforderung gesendet. Zu diesem Zweck wird die zusätzlich benötigte Redundanz z. B. über einen fehlerfreieren GSM- oder UMTS-Kanal versendet. Dadurch verringert sich die Gefahr einer mehrfachen Übertragung der Redundanz-Information. Dies verringert letztendlich die Verzögerung (Delay) und Kapazitätsverluste.

Eine zehnte Ausführungsvariante betrifft sich selbsttätig aufbauende Netze, sogenannte Ad-Hoc-Netze, in denen Informationen über mobile Router bzw. Leitstationen für Verbindungen von einem Endpunkt zu einem anderen Endpunkt übertragen werden müssen. In der Praxis sollte dies möglichst verlustfrei bzw. energiearm erfolgen, was allerdings eine Kenntnis zumindest des unmittelbaren Nachbarn bzw. der unmittelbaren Nachbarstation voraussetzt, um eine möglichst minimale Sendeleistung verwenden zu können. Da insbesondere dafür Lokalisierungssysteme in der Zukunft eine immer größere Rolle spielen werden, können die Positionsdaten eines Teilnehmers bzw. einer Station für einen solchen Leitweg- bzw. Routing-Algorithmus verwendet werden.

Gemäß einer elften Ausführungsvariante wird ein Kommunikationsnetz gemäß dem 2G/3G-Standard betrachtet, welches in der Lage ist, Ad-hoc-Terminals bzw. -Stationen zu managen. Neben dem Routing-Algorithmus kann auch die sonstige Teilnehmerverwaltung bezüglich Verbindungseinleitung, Verbindungsfreigabe, Vergebührung, Authentisierung, Autorisierung von diesem 2G/3G-Kommunikationsnetz vorgenommen werden. Ein weiteres Beispiel dazu ist die zu verwendende Luftschnittstelle zwischen den einzelnen Routern, wobei zwischen beispielsweise den ersten beiden Routern das sichere Kommunikationsnetz gemäß GSM verwendet werden kann, während in fortlaufenden weiteren Verbindungen nur UMTS verwendet wird. Auch dabei ist in vorteilhafter Weise die Steuerung bzw. Steuerebene beim GSM im Verbindungszustand wieder übergreifend.

Gemäß einer zwölften Ausführungsvariante können Daten, wie dies bereits einleitend beschrieben ist, aufgesplittet und über zwei verschiedene Kommunikationsnetze übertragen werden. Für den Fall einer sich bewegenden Station, die zwischenzeitlich eines der Kommunikationsnetze verlässt und erst zu einem späteren Zeitpunkt wieder in ein solches Kommunikationsnetz eintritt, kann auch vorgesehen werden, dass für solche Zwischenzeiten sämtliche Daten über das verbleibende Kommunikationsnetz übertragen werden. Dies gilt insbesondere für Situationen, bei denen das sichere Kommunikationsnetz GSM/A fortwährend eine Verbindung ermöglicht und das nicht speziell gesicherte Kommunikationssystem nur in Form lokaler, sich nicht überlappender Datennetze bereitsteht.

Wesentliche Vorteile bestehen somit darin, dass aufwendige Mechanismen für Authentisierung, Autorisierung, Sicherheit bzw. Verschlüsselung, Vergebührung und Berechnung über ein System verwaltet werden können, während im Gesamtnetz anderweitig eingesetzte Systemtypen entsprechend zu "Lasteseln" degradiert werden, was insgesamt den Installationsaufwand und die Betriebskosten für diese Systeme erheblich reduziert.

In vorteilhafter Weise werden dadurch Systeme ohne spezielle Sicherheitsmechanismen, wie z.B. HiperLAN/2 aufgewertet. Dies ist von erheblichem Vorteil, da H2-Systeme insbesondere in einer Einführungsphase an vielen verstreuten Orten, wie Unternehmen, sogenannten hot spots, Flughäfen, ... unabhängig voneinander betrieben werden, so dass ein durchgängiges einheitliches Sicherheitskonzept anders nur schwer realisierbar wäre.

Vorteilhaft ist insbesondere auch die Verfahrensweise zur kontinuierlichen Verschlüsselung und Entschlüsselung von Daten, wobei die Übertragung von Codes einmalig, blockweise oder kontinuierlich erfolgen kann. Codes können insbesondere für jede Verbindung neu generiert werden, können aber auch aus einem bestehenden Pool gezogen und verwendet werden. Die Übertragung von Codes kann auch zur Übertragung von Informationen in Aufwärtsverbindungen verwendet werden. Ein Server sendet Schlüssel bzw. Codes, mit denen die Daten in einer Aufwärtsverbindung verschlüsselt werden müssen.

Vorteilhaft ist auch, dass ergänzende Informationen, wie z. B. Bildinhalte für eine höhere Bildqualität online und abschnittsweise gesichert werden können. Während über eine kontinuierliche Verbindung grundlegende unabdingbare Daten übertragen werden, die eine Grundinformation sichern, kann die Übertragung weiterer Daten zwischenzeitlich über andere Netze, insbesondere lokale Datennetze erfolgen.

In vorteilhafter Weise ist auch ein dynamisches Freischalten der Nutzungsdauer ohne eine Neukonfiguration bzw. eine Neuzustellung von Berechtigungsnachweisen möglich. Beispielsweise kann eine Zeitdauer beliebig eingestellt werden, in der ein neuer Film mit hoher Qualität auch von nicht zahlenden Teilnehmern betrachtet werden kann. Danach ist nur noch eine Betrachtung des Films mit niedrigerer Qualität möglich, um den Teilnehmer zwar nicht vom restlichen Film auszuschließen, jedoch einen Anreiz zu bieten, ebenfalls den entsprechend zu vergebührenden Dienst mit hoher Übertragungsqualität zu nutzen.

Vorteilhaft ist auch, dass keine speziellen Kenntnisse über den Schlüsseln seitens des Endgerätes bzw. einer empfangenden Station nötig sind. Es gibt nicht zwingend gespeicherte Schlüssel, da Schlüssel C in der datenaufteilenden oder datencodierenden Station generiert und dann über einen eigenen, sicheren Datenübertragungsweg übertragen werden können.

Beim Wechseln von Zellen des eigenen Kommunikationssystems ist insbesondere eine Unterstützung von Mobilitätsfunktionen durch überlagernde Netzfunktionalitäten vorteilhaft. Zweckmäßiger Weise werden Sicherungsverfahren verwendet, die auch über die Grenzen des lokalen, isolierten FunkKommunikationssystems hinaus gültig sind.

Besonders vorteilhaft ist auch die Möglichkeit der Unterstützung eines vertikalen Handovers durch homogene Sicherungssysteme. Durch eine zentrale Sicherungsinstanz in einem Kommunikationsnetz, insbesondere Mobilfunknetz GSM/A kann dies organisiert werden, wobei die Sicherungsinstanz von der Technologie der Datenübertragung für den speziellen gewählten Dienst unabhängig ist. Dadurch können vertikale handover zwischen verschiedensten Betreibern und Technologien sehr schnell ohne zeitaufwendige Autorisierung, Authentisierung und Vergebührung durchgeführt werden. Dies ermöglicht z. B. einem Teilnehmer mit seiner Station MS1 durch verschiedene Kaufhäuser in einer Stadt zu gehen und dort jeweils sofort Zugriff auf die lokalen Server nehmen zu können.

In vorteilhafter Weise ist auch ein optimiertes Codierungsverfahren möglich, das insbesondere auf inkrementeller Redundanz beruht. Dabei wird je nach Fehlerrate der empfangenen Daten mehr oder weniger Redundanz angefordert und nachgesendet. Dieses Verfahren ist für sich sehr effektiv. Kritisch sind Situationen, bei denen die Redundanz wieder, z. B. durch einen erneut sehr stark gestörten Funkkanal, nicht mehr empfangen werden kann. Wird nur die nachgefragte Redundanz über den gesicherten weiteren Funkkanal übertragen, so ist eine weitere Optimierung des Prinzips der inkrementellen Redundanz zu erwarten.

Vorteilhaft ist auch die Möglichkeit der Nutzung von verkabelten Systemen, wie beispielsweise herkömmlichen Datennetzen, durch übergeordnete Sicherungssysteme im vorstehenden Sinne.

Zwar ist bei der vorgeschlagenen Verfahrensweise in nachteilhafter Weise eine zusätzliche Belastung des sicheren Kommunikationsnetzes GSM/A zu erwarten, jedoch überwiegen die Vorteile eines solchen Systems. Bedingt nachteilhaft ist auch, dass zu zwei verschiedenen Funksystemen gleichzeitig eine Verbindung aufzubauen ist, d.h. beide Techniken verfügbar seien müssen. Dabei ist es jedoch vorteilhafterweise möglich, als Rückfallebene auf umständlichere Sicherungsverfahren zurückzugreifen, falls aktuell kein Zugriff auf sichere Kommunikationsnetze gemäß GMS, GPRS oder UMTS möglich ist.

Zweckmäßiger Weise sollte auch eine Einigung der Betreiber verschiedener Kommunikationssysteme auf ein gemeinsames Verfahren vorgenommen werden.

Hervorzuheben ist somit insbesondere der vorgeschlagene Aufbau von zwei Verbindungen zu verschiedenen Funksystemen, von denen eine Verbindung eine sichere Verbindung höheren Standards gemäß z.B. 2G bzw. 3G sein sollte, die zweckmäßiger Weise während der gesamten Übertragung erhalten bleiben sollte. Über diese 2G- bzw. 3G-Verbindung werden jedoch lediglich minimale Datenmengen versendet, die es erlauben sollen, bereits voll entwickelte AAA-Verfahren aus 2/3G auf neue breitbandige Systeme, z.B. H2 zu übertragen.

Hinsichtlich der Einleitung eines solchen Verfahrens kann zwischen verschiedenen Grundsituationen unterschieden werden. Vor Beginn der Nutzung eines Dienstes identifiziert sich ein Teilnehmer über seine Station bei der Buchung eines Dienstes vor der Inanspruchnahme dieses Dienstes beim Provider des Dienstes über das sichere Kommunikationsnetz GSM/A und erhält daraufhin die Zugriffsberechtigung auf diesen Dienst, z. B. eine Kennung, ein Passwort usw. Diese Zugriffsberechtigung bleibt während der gesamten Nutzungsdauer aktiv und muss erst bei einer erneuten Nutzung bzw. einem erneuten Einbuchen eingegeben oder neu generiert werden. Zur Erhöhung der Sicherheit wird dabei oftmals eine regelmäßige Änderung eines Passwortes oder Codes durchgeführt.

Befindet sich eine Station bereits während der Nutzung, so ist die Freischaltung des Dienstes in der Regel ein kontinuierlicher Prozess und wird, wie z. B. beim sogenannten Pay-TV, durch die Verschlüsselung des Datenstroms realisiert.

Eine weitere Situation geht von dem Zeitpunkt nach Abschluss der Nutzung aus. Werden in einem solchen Fall kostenpflichtige Dienste in Anspruch genommen, kann der Beginn der Nutzung festgestellt und in Rechnung gestellt werden. Verfügt das Verteilsystem, wie z. B. eine isolierte HiperLAN-Funkzelle über keine durchgängige Aufwärtsverbindung (Uplink) zum Vergebührungsserver, so kann die Nutzungsdauer nicht bestimmt werden. Durch das vorstehend beschriebene Verfahren kann auch die Nutzungsdauer zur Abrechnung herangezogen werden, da die Einbuchungszeit im sicheren Kommunikationsnetz bekannt ist. Vergebührung und Verrechnung sind somit möglich.

Ein weiterer Fall geht von der nicht bestehenden Verbindung bzw. Offline-Situation aus, wobei vom Teilnehmer bzw. dessen Station ein verschlüsselter Datensatz mit oder ohne vorheriger Freischaltung bzw. Genehmigung durch den Provider auf seinen persönlichen Datenträger kopiert und erst danach durch ein entsprechendes Verfahren unter Zuhilfenahme von Verschlüsselungscodes bzw. Berechtigungsnachweisen entschlüsselt wird.

## Patentansprüche

**1.** Verfahren zum Übertragen von Daten (D) über eine Schnittstelle (VA, BS, A) eines Kommunikationssystems (GSM/A) zwischen zumindest einem Sender (MS1) und zumindest einem Empfänger (MS2), bei dem zumindest ein Teil der Daten (CD) sicher zu übertragen ist,
**dadurch gekennzeichnet, dass**
- der sicher zu übertragende Teil der Daten (CD) über eine sichere Schnittstelle (VA, GSM, A) übertragen wird und
- der restliche Teil der Daten (ND) über eine nicht speziell gesicherte Schnittstelle (VB, WLAN, B) übertragen wird.

**2.** Verfahren nach Anspruch 1, bei dem
- als der sicher zu übertragende Teil der Daten (CD) Grunddaten für die Wiederherstellung einer Grundinformation ausgewählt und/oder übertragen werden und
- als der restliche Teil der Daten (ND) die Grundinformation ergänzende Daten (ND) ausgewählt bzw. übertragen werden.

**3.** Verfahren nach Anspruch 1 oder 2, bei dem
- als der sicher zu übertragende Teil der Daten (CD) ein Code zum Entschlüsseln codierter Daten (ND) übertragen wird und
- zumindest eine Untermenge des restlichen Teils der Daten (ND) als mit dem Code (CD) verschlüsselte Daten (ND) übertragen wird.

**4.** Verfahren nach einem vorstehenden Anspruch, bei dem
- in einer senderseitigen Trennungseinrichtung (DIV) eintreffende oder bestehende, zu übertragende Daten (D) zumindest teilweise mit einem Code (C), insbesondere einem zeitlich begrenzten und/oder zufälligen Code, verschlüsselt werden, wobei
- der Code (C) zur sicheren Schnittstelle (VA, GSM, A) weitergeleitet wird und
- die verschlüsselten Daten (ND) zur nicht speziell gesicherten Schnittstelle (VB, WLAN, B) weitergeleitet werden, und
- in einer empfängerseitigen Kombinierungseinrichtung (COMB) die über entsprechende Schnittstellen (VA, GSM, A; VB, BLAN, B) empfangenen Daten wieder entsprechend entschlüsselt und als bestmöglich konstruierte Daten (D) ausgegeben werden.

**5.** Verfahren nach einem vorstehenden Anspruch, bei dem
- in einer Trennungseinrichtung (DEV) eintreffende oder bestehende Daten (D) in empfängerseitig wesentliche und unwesentliche Daten (CD bzw. ND) aufgeteilt werden,
- wobei die wesentlichen Daten zur sicheren Schnittstelle (VA, GSM, A) weitergeleitet werden und
- die nicht-wesentlichen Daten (ND) zur nicht speziell gesicherten Schnittstelle (VB, BLAN, B) weitergeleitet werden und
- in einer empfängerseitigen Kombinierungseinrichtung (COMB) die über die entsprechenden Schnittstellen (VA, GSM, A; VB, WLAN, B) empfangenen Daten (CD bzw. ND) wieder entsprechend kombiniert und als bestmöglich rekonstruierte Daten (D) bereit gestellt werden.

**6.** Verfahren nach einem vorstehenden Anspruch, bei dem
als sicher zu übertragende Daten (CD) in zumindest einer Richtung über die sichere Schnittstelle (VA, GSM, A) vergebührungsrelevante Daten mit Bezug auf den restlichen Teil der Daten (ND) übertragen werden.

**7.** Verfahren nach einem vorstehenden Anspruch, bei dem
- über eine erste der Schnittstellen, insbesondere über die sichere Schnittstelle (VA, GSM, A), eine kontinuierliche Verbindung aufgebaut wird und
- über die andere Schnittstelle, insbesondere über die nicht speziell gesicherte Schnittstelle (VB, WLAN, B), zeitweilige Verbindungen nach Bedarf aufgebaut werden.

**8.** Verfahren nach Anspruch 7, bei dem
bei Aufbaumöglichkeit einer zeitweiligen Verbindung über die andere Schnittstelle (VB) zumindest ein Teil der Daten (ND) über diese und ansonsten über die Schnittstelle mit der kontinuierlichen Verbindung übertragen wird.

**9.** Verfahren nach Anspruch 7 oder 8, bei dem
über zumindest eine der Schnittstellen (VA, GSM bzw. VB, WLAN) Informationen über Daten benachbarter Schnittstellen des eigenen und/oder anderen Schnittstellensystems übertragen werden, insbesondere Informationen über hinsichtlich räumlicher Anordnung oder Systemparametern benachbarter Funkzellen, in die ein Wechsel des Senders oder des Empfängers möglich ist.

**10.** Datenverarbeitungsvorrichtung (DIV) für eine Kommunikationssystemeinrichtung (GSM; WLAN) mit
- einem Dateneingang zum Eingeben von über eine Schnittstelle (VA; VB) zu übertragende Daten (D),
- einer Verarbeitungseinrichtung (DIV) zum Verarbeiten der zu übertragenden Daten (D),
- einem ersten Datenausgang zum Ausgeben von über die Schnittstelle (VA) zu übertragenen Daten (D) und
- einem weiteren Datenausgang zum Ausgeben weiterer der zu übertragenen Daten (D),
- wobei der erste Datenausgang zum Übertragen sicher zu übertragender Teile der Daten (CD) mit einer sicheren Schnittstelle (VA, GSM) und der weitere Datenausgang zum Übertragen weiterer Teile der Daten (ND) mit einer nicht speziell gesicherten Schnittstelle (VB, WLAN) verbunden ist.

**11.** Datenverarbeitungsvorrichtung (COMB) für eine Kommunikationssystemeinrichtung (GSM, WLAN) mit
- einem ersten Dateneingang zum Eingeben von über die Schnittstelle (VA) empfangenen Daten (D),
- einem weiteren Dateneingang zum Eingeben von über eine Schnittstelle (VB) empfangenen weiteren Daten (D),
- einer Verarbeitungseinrichtung (COMB) zum Verarbeiten der empfangenen Daten (D) und
- einem Datenausgang zum Ausgeben von in der Verarbeitungseinrichtung (COMB) verarbeiteten Daten (D),
- wobei die Verarbeitungseinrichtung (COMB) über den ersten Dateneingang zum Empfangen eines sicher übertragenen Teils der Daten (CD) mit einer sicheren Schnittstelle (VA, GSM) und über den weiteren Dateneingang für den Empfang weiterer Teile der Daten (ND) mit einer nicht speziell gesicherten Schnittstelle (VB, WLAN) verbunden ist.

**11.** Verfahren bzw. Vorrichtung nach einem vorstehenden Anspruch, bei dem die sichere Schnittstelle (VA, GSM, A) sicher hinsichtlich der Verfügbarkeit und/oder sicher hinsichtlich der Datensicherheit ausgebildet ist.
